# EUROPÄISCHE PATENTSCHRIFT

(11) **EP 2 641 856 B1**
(45) Veröffentlichungstag und Bekanntmachung des Hinweises auf die Patenterteilung: **09.04.2014**
(21) Anmeldenummer: 13163762.1
(22) Anmeldetag: 09.11.2011
(51) Int. Cl.: B65G 63/00, G05D 1/00, B60P 1/64, B65G 67/02

(54) **Wahlweise fahrerlos oder bemannt betreibbares, flurgebundenes und gummibereiftes Containertransportfahrzeug**
Ground-travelling and rubber-tyred container transport vehicle which can be operated in a driverless or manned manner as selected
Véhicule porte-conteneurs sur pneumatiques et reliés au sol, pouvant être utilisés sélectivement avec ou sans chauffeur

(30) Priorität: 11.11.2010 DE 102010060504
(43) Veröffentlichungstag der Anmeldung: 25.09.2013
(62) Teilanmeldung aus: 11782594.3
(73) Patentinhaber: Gottwald Port Technology GmbH, 40597 Düsseldorf (DE)
(72) Erfinder: Franzen, Hermann, 41238 Mönchengladbach (DE); Wieschemann, Armin, 46119 Oberhausen (DE); Moutsokapas, Jannis, 40789 Monheim (DE)
(74) Vertreter: Moser & Götze

(56) Entgegenhaltungen:
- DE-A1-102007 030 098
- DE-A1-102007 039 778
- DE-U1- 8 103 755
- US-A- 4 162 869
- US-A- 4 215 759
- US-A- 6 129 026

## Beschreibung

Die Erfindung betrifft ein wahlweise fahrerlos oder bemannt betreibbares, flurgebundenes und gummibereiftes Containertransportfahrzeug, wobei das Containertransportfahrzeug mit einem in Wirkverbindung mit dem Fahrantrieb und/oder der Lenkung und/oder der Bremsanlage bringbaren Steuersystem für einen fahrerlosen Betrieb ausgestattet ist, das Mittel zum Eingeben und Speichern von möglichen Fahrtrouten und einer Transportaufgabe, Mittel zum automatischen Bestimmen der Fahrzeugposition im Raum, Mittel zur Steuerung der Bewegung des Containertransportfahrzeugs in Abhängigkeit von dessen Position im Raum und von der vorgegebenen Transportaufgabe und Mittel zum Abbremsen des Containertransportfahrzeugs beim Vorhandensein von Hindernissen aufweist, und das Containertransportfahrzeug mit einer Hilfseinrichtung zur Steuerung in einem bemannten Betrieb verbindbar ist.

Systeme für den Umschlag, also das Be- und Entladen von Fahrzeugen, Schiffen und Eisenbahnen sowie der Speicherung von Containern sind bekannt.

In den bekannten Systemen werden für die Containerhandhabung und den Containertransport einerseits bemannte Einrichtungen und Transportfahrzeuge und andererseits fahrerlose beziehungsweise mannlose Einrichtungen und Transportfahrzeuge, beispielsweise so genannte Automated Guided Vehicles (AGVs), eingesetzt. Unter bemannten Einrichtungen oder Transportfahrzeugen werden hierbei solche verstanden, die von mitfahrenden Fahrern beziehungsweise Fahrzeugführern aktiv gesteuert werden. Im Gegensatz dazu werden fahrerlose beziehungsweise mannlose Einrichtungen oder Transportfahrzeuge in einem Automatik-Betrieb ohne aktives Einwirken eines Fahrers gesteuert. "Mannlos" beziehungsweise "fahrerlos" bezieht sich lediglich auf das tatsächliche Eingreifen eines Fahrers in den Steuerungsvorgang. In diesem Sinne kann ein mannloser Automatik-Betrieb einer entsprechenden Einrichtung oder eines Transportfahrzeugs auch dann gegeben sein, wenn ein Fahrer mitfährt, hierbei jedoch nicht aktiv in die Steuerung eingreift.

So ist aus der EP 0 302 569 B1 ein Speicher- und Überführungssystem für Container, umfassend ein Kai mit Kaikränen zum Be- und Entladen von Container-Schiffen, die an dem genannten Kai festgemacht sind, ein Container-Speicherdepot, das mit einer Gruppe von Portalkran-Laufbahnen versehen ist, die nebeneinander angeordnet sind, eine Anzahl von nicht auf Schienen geführten Fahrzeugen für den Transport von Containern zwischen den Kaikränen und den Portalkränen, und Mittel für die automatische Steuerung der Fahrzeuge bekannt. Die Mittel für die automatische beziehungsweise fahrerlose Steuerung der Fahrzeuge umfassen ein frei programmierbares Wegewählsystem, das in der Lage ist, jedes Fahrzeug entlang vorprogrammierter Positionen in dem Kaibereich ohne Führungsbahnen zu führen. Jedes Fahrzeug ist mit einer Navigationseinrichtung zur Bestimmung des einzuschlagenden Weges und zum Vergleich desselben mit dem Sollweg versehen, das ein Bezugsgitter von Transpondern und/oder Induktionsdrähten in, auf oder unter der Straßendecke des Kaibereichs angeordnet ist, und jedes Fahrzeug ist mit einer oder mehreren Sender-Empfänger-Einheiten versehen, die durch gegenseitige Beeinflussung mit dem genannten Bezugsgitter die Position des Fahrzeugs bestimmen, um Signale zu der Steuervorrichtung des Fahrzeugs zwecks Korrektur der Fahrzeugposition zu übermitteln.

Diese sogenannten fahrerlosen Transportfahrzeuge beziehungsweise AGVs sind flurgebundene und gummibereifte Fördermittel mit eigenem Fahrantrieb, die automatisch, also ohne mitfahrenden Fahrer beziehungsweise Fahrzeugführer, gesteuert und berührungslos geführt werden. Diese sind zum Beispiel in der VDI Richtlinie 2510 definiert.

Entsprechende Fahrzeuge sind auch aus der DE 10 2007 039 778 A1 bekannt, aus der ein flurgebundenes Transportfahrzeug für den Transport von Containern mit mindestens einer auf einem Fahrzeugrahmen des Transportfahrzeuges angeordneten Hubplattform, die aus einer abgesenkten Transportstellung über einen Hubantrieb in eine angehobene Übergabestellung anhebbar beziehungsweise umgekehrt absenkbar ist, hervorgeht. Die Hubplattform ist über mindestens einen Kniehebel auf dem Fahrzeugrahmen befestigt, wobei die Hubplattform über den mindestens einen Kniehebel anhebbar beziehungsweise absenkbar ist und der Hubantrieb auf den mindestens einen Kniehebel wirkt und die Hubplattform für die Hub- und Senkbewegung an dem Transportfahrzeug führt.

Aus der DE 196 13 386 A1 ist ein Gegengewichtsgabelstapler bekannt, der wahlweise bemannt oder fahrerlos betreibbar und mit einer Gabel zur Handhabung von Paletten und darauf befindlichen Lasten versehen ist. Das Flurförderzeug ist für den fahrerlosen Automatik-Betrieb mit einem in Wirkverbindung mit dem Fahrantrieb und/oder der Lenkung und/oder der Bremsanlage und/oder der Bewegungssteuerung der Gabel bringbaren Kontrollsystem ausgestattet. Ferner umfasst das Fahrzeug Mittel zum Eingeben und Speichern von möglichen Fahrtrouten und einer Transportaufgabe, Mittel zum autonomen Bestimmen der Fahrzeugposition im Raum, Mittel zur Steuerung der Bewegung des Fahrzeugs in Abhängigkeit von dessen Position im Raum und von der vorgegebenen Transportaufgabe, Mittel zum Erkennen des Vorhandenseins, der Position und der Ausrichtung einer Palette, Mittel zur Steuerung der Bewegung der Gabel und/oder des Fahrzeugs in Abhängigkeit von der Position, der Ausrichtung der Palette und der Transportaufgabe und Mittel zum Abbremsen des Fahrzeugs beim Vorhandensein von Hindernissen.

Aus der Patentanmeldung US 6 129 026 A ist ein System zum Umschlagen von Luftfracht in einem Flughafenbereich zwischen Gepäckaufgabestationen beziehungsweise Gepäckannahmestationen und wartenden Flugzeugen bekannt. Für diesen Umschlag werden Transportfahrzeuge verwendet, die in einem Mischbetrieb arbeiten und hierbei zwischen einem von einem Fahrer gesteuerten bemannten Betrieb und einem fahrerlosen Automatik-Betrieb wechseln. Die Transportfahrzeuge werden in einem Teilbereich des Vorfeldes und auf dem Weg zu den Gepäckaufgabestationen beziehungsweise Gepäckabgabestationen entlang von Stromschienen automatisch und fahrerlos verfahren. Da die Positionen der wartenden Flugzeuge nie identisch sind, werden die Transportfahrzeuge bei der Anfahrt im Bereich der Flugzeuge von einem Fahrer gesteuert.

Aus der deutschen Gebrauchsmusterschrift DE 20 2007 016 156 U1 sind Portalhubwagen, so genannte Straddle Carrier, bekannt, die beim Transportieren und Stapeln von Containern ebenfalls in einem Mischbetrieb arbeiten. Hierbei wird der Straddle Carrier bemannt an einen Containerstapel herangefahren. Das Einfädeln des Straddle Carriers zur Aufnahme beziehungsweise Abgabe von Containern oberhalb des obersten Containers eines Containerstapels erfolgt über eine vom Fahrer aktivierbare automatische Lenkung mit einem Laserscanner.

Der Erfindung liegt die Aufgabe zugrunde, ein verbessertes wahlweise fahrerlos oder bemannt betreibbares, flurgebundenes und gummibereiftes Containertransportfahrzeug zu schaffen.

Diese Aufgabe wird durch ein wahlweise fahrerlos oder bemannt betreibbares, flurgebundenes und gummibereiftes Containertransportfahrzeug mit den Merkmalen des Anspruchs 1 gelöst. Vorteilhafte Ausgestaltungen der Erfindung sind in dem Unteranspruch 2 angegeben.

Erfindungsgemäß wird ein verbessertes wahlweise fahrerlos oder bemannt betreibbares, flurgebundenes und gummibereiftes Containertransportfahrzeug, wobei das Containertransportfahrzeug mit einem in Wirkverbindung mit dem Fahrantrieb und/oder der Lenkung und/oder der Bremsanlage bringbaren Steuersystem für einen fahrerlosen Betrieb ausgestattet ist, das Mittel zum Eingeben und Speichern von möglichen Fahrtrouten und einer Transportaufgabe, Mittel zum automatischen Bestimmen der Fahrzeugposition im Raum, Mittel zur Steuerung der Bewegung des Containertransportfahrzeugs in Abhängigkeit von dessen Position im Raum und von der vorgegebenen Transportaufgabe und Mittel zum Abbremsen des Containertransportfahrzeugs beim Vorhandensein von Hindernissen aufweist, und das Containertransportfahrzeug mit einer Hilfseinrichtung zur Steuerung in einem bemannten Betrieb verbindbar ist, dadurch erreicht, dass die Hilfseinrichtung eine Fahrerkabine umfasst, die mit einem Kontrollsystem für die Lenkung, die Bewegungssteuerung und das Bremsen im bemannten Betrieb versehen ist, und das Containertransportfahrzeug an der vorderen Stirnseite eine lösbare Befestigungsmöglichkeit für die Fahrerkabine aufweist.

In einer vorteilhaften Ausführungsform ist vorgesehen, dass das Containertransportfahrzeug eine Schnittstelle zum Ankoppeln des Kontrollsystems für den bemannten Betrieb an die Fahrzeugsteuerung aufweist.

Weitere Einzelheiten, Merkmale und Vorteile der Erfindung ergeben sich aus der nachfolgenden Beschreibung eines Ausführungsbeispiels anhand der Zeichnung, in der
Figur 1 eine Draufsicht auf eine schematische Darstellung eines Systems für den Umschlag von Containern in einem Hafen und
Figur 2 eine perspektivische Ansicht eines wahlweise automatisch oder manuell betreibbaren Containertransportfahrzeugs.

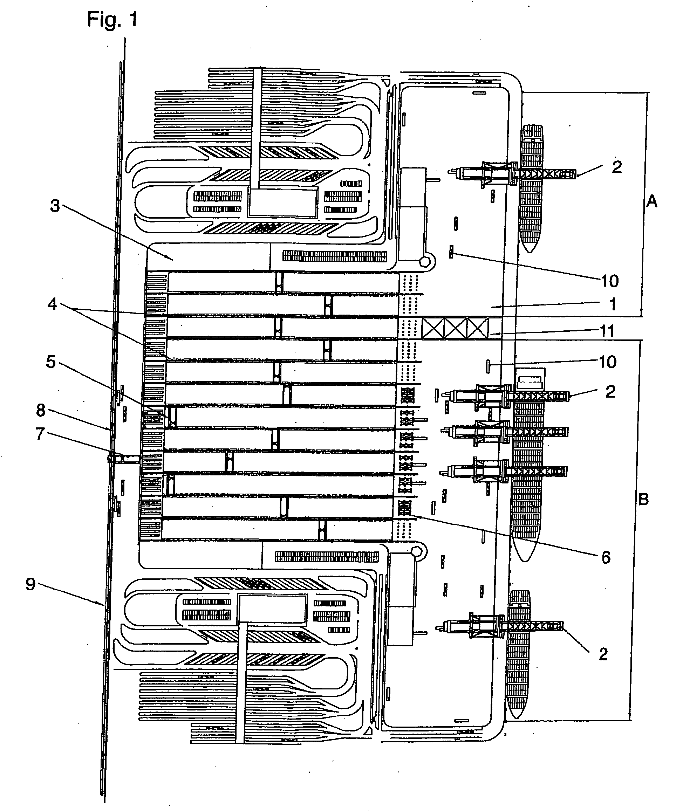

Figur 1 zeigt eine Draufsicht auf eine schematische Darstellung eines Systems für den Umschlag von Containern in einem Hafen mit einem Kai 1, an dem Schiffe für die Be- und Entladung anlegen.

Dazu sind mehrere Containerbrücken 2 vorgesehen, die mit ihren Auslegern einerseits die Schiffe und andererseits den Kai 1 überstrecken.

Das System umfasst ferner ein Containerlager 3 bekannter Art mit einer Vielzahl von Lagergassen 4, die jeweils von einem oder mehreren ersten Portalkranen 5 bedient werden, die auf entlang der Lagergassen 4 verlaufenden Schienenwegen verfahrbar sind.

Auf der dem Kai 1 zugewandten Seite des Containerlagers 3 sind vor jeder Lagergasse 4 Übergabeplätze 6 angeordnet, an denen Container abgestellt werden, um in das Containerlager 3 eingelagert oder ausgelagert zu werden.

Auf der von dem Kai 1 abgewandten landseitigen Seite des Containerlagers 3 ist ein LKW- und/oder Eisenbahn-Übergabebereich angeordnet. Hier können LKW und Wagons mit Containern be- und entladen werden, die entweder aus dem Containerlager 3 ausgelagert oder in die Containerlager 3 eingelagert werden.

Hierzu umfasst der landseitige Übergabebereich mehrere zweite Portalkrane 7 mit drehbaren Hubwerken für die Be- und Entladung der LKW auf Übergabeplätzen 8 oder Eisenbahnwagons auf einer Schienenstrecke 9.

Auf dem Kai 1 werden die von den Schiffen abgeladenen Container von den Containerbrücken 2 entweder abgelegt oder die Container für die Beladung der Schiffe aufgenommen.

Der Containertransport auf dem Kai 1 findet mit flurgebundenen Containertransportfahrzeugen 10 statt, die üblicherweise mit Luft befüllte Gummireifen aufweisen und hierüber frei und insbesondere nicht schienengebunden verfahrbar sind.

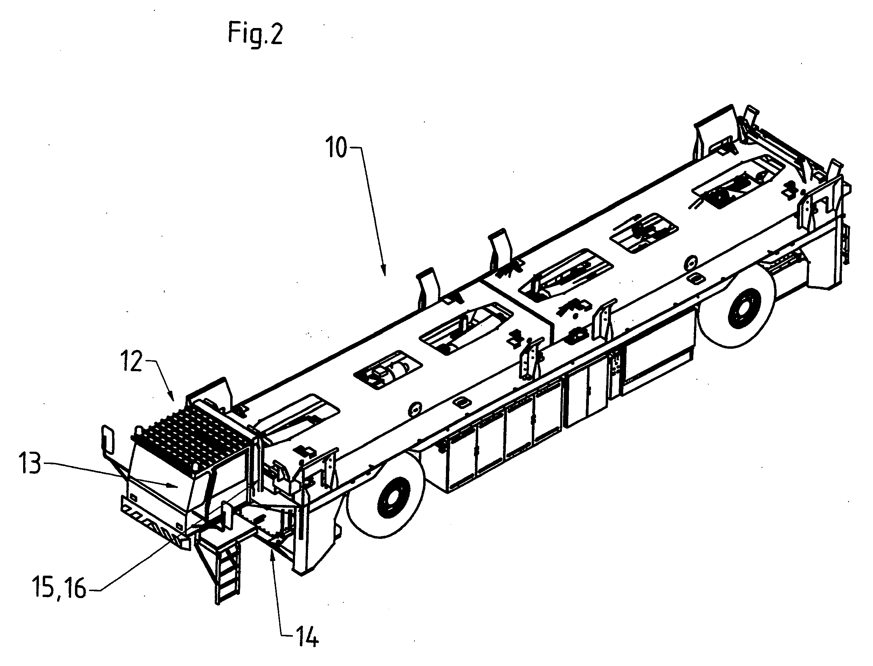

Hierbei handelt es sich üblicherweise um automatisierte und somit fahrerlos betreibbare Transportfahrzeuge, also AGVs. Auch das in Figur 2 abgebildete Containertransportfahrzeug 10 ist als AGV ausgebildet und weist nach Art eines Pritschenwagens zwei voneinander getrennte und hintereinander angeordnete Ladeflächen zum Abstellen von jeweils einem Container auf. Alternativ können die Ladeflächen über Hubvorrichtungen heb- und senkbar ausgebildet sein. Entsprechende AGVs beziehungsweise Containertransportfahrzeuge 10 können selbstverständlich ebenso als Portalhubwagenbeziehungsweise Straddle Carrier ausgebildet sein und somit auch zum Stapeln von Containern geeignet sein.

Der Kai 1 ist in mindestens einen Automatik-Bereich A für den Containertransport, in dem fahrerlose Containertransporteinrichtungen, das heißt als AGV ausgebildete Containertransportfahrzeuge 10 wie beispielsweise Straddle Carrier, eingesetzt sind, und in mindestens einen Manuell-Bereich B für den Containertransport, in dem bemannte Containertransporteinrichtungen eingesetzt sind, aufgeteilt.

Erfindungsgemäß sind die Containertransportfahrzeuge 10 außer in einem fahrerlosen Automatik-Betrieb wahlweise auch bemannt betreibbar. Dadurch können die Containertransportfahrzeuge 10 sowohl als mannlose Containertransporteinrichtungen ohne Fahrer im Automatik-Bereich A als auch als bemannte Containertransporteinrichtungen mit Fahrer im Manuell-Bereich B verwendet werden.

Aus Sicherheitsgründen ist der Automatik-Bereich A gegen den Zutritt von Personen geschützt, zum Beispiel durch einen Zaun und elektronische Zugangssperren an den Zugängen.

Dementsprechend sind auch der Automatik-Bereich A und der Manuell-Bereich B durch eine Sicherheitsschleuse 11 getrennt.

Die Sicherheitsschleuse 11 verhindert einen ungewollten Zutritt von Personen beziehungsweise Fahrern und auch das Hinüberfahren von Containertransportfahrzeugen 10 von dem Manuell-Bereich B in den Automatik-Bereich A und umgekehrt.

Es versteht sich, dass der gewollte und beabsichtigte und erlaubte Zutritt oder das Hinüberfahren in den jeweils anderen Bereich unter gewissen Umständen möglich ist.

Solche Umstände wären zum Beispiel der beabsichtigte Zutritt von Wartungspersonal für eine Reparatur in den Automatik-Bereich A oder auch das gewollte Hinüberfahren eines Containertransportfahrzeugs 10. Dies ist unter Einhaltung von Sicherheitsmaßnahmen möglich, wie zum Beispiel ein Ausstieg des Fahrers und sein Verlassen der Sicherheitsschleuse 11 beim Hinüberfahren des Containertransportfahrzeugs 10 in den Automatik-Bereich A sowie gegebenenfalls elektronische Quittierung etc.

Um dies zu ermöglichen, sind die grundsätzlich als AGV ausgebildeten Containertransportfahrzeuge 10 bei Bedarf und/oder ständig mit einer Hilfseinrichtung ausstattbar, die den bemannten Betrieb und insbesondere die Steuerung durch einen Fahrer erlaubt.

Die Hilfseinrichtung umfasst im Wesentlichen eine Fahrerkabine 12, die mit einem Kontrollsystem 13 für den bemannten Betrieb des Containertransportfahrzeugs 10 und hierbei insbesondere für die Lenkung, die Bewegungssteuerung und das Bremsen durch einen Fahrer versehen ist. Solche Kontrollsysteme an sich sind von ausschließlich mit einem Fahrer bemannt betreibbaren Containertransportfahrzeugen bekannt.

Die Aktivierung der Hilfseinrichtung beziehungsweise die Übernahme der Kontrolle des Containertransportfahrzeugs 10 durch das Kontrollsystem 13 und den Fahrer im bemannten Betrieb erfolgt über eine Sicherheitsschaltung nach zweifacher Quittierung. Somit ist ein unbeabsichtigtes Ein- und Ausschalten des Automatik-Betriebs beziehungsweise des bemannten Betriebs der Containertransportfahrzeuge 10 verhindert.

Das Kontrollsystem 13 ist dann so ausgestaltet, dass nach der Aktivierung in die Fahrzeugsteuerung eines bis dahin automatisch beziehungsweise fahrerlos betriebenen Containertransportfahrzeugs 10 eingegriffen und von dem Fahrer übernommen wird.

Die Fahrerkabine 12 ist am vorderen Ende 14 des Containertransportfahrzeugs 10 in einer erhöhten Position lösbar angeordnet, das heißt sie kann von dem Containertransportfahrzeug 10 abgenommen werden, da sie lediglich durch entfernbare Halterungen, zum Beispiel Bolzen, und elektrisch oder durch andere Energie- und Signalübertragungseinrichtungen mit diesem verbunden ist.

Sie ist zudem mit passiven Sicherheitselementen zum Schutz der Fahrerkabine 12 und des darin befindlichen Fahrers, wie einem Bügelsystem nach Art eines Überrollschutzes, ausgestattet.

Um die Steuerung des Containertransportfahrzeugs 10 durch einen Fahrer aus der Fahrerkabine 12 heraus zu ermöglichen, ist in dieser also ein Kontrollsystem 13 für den bemannten Betrieb angeordnet. Damit dieses auf das Containertransportfahrzeug 10 einwirken kann, ist eine Schnittstelle 15 für den Anschluss an die Fahrzeugsteuerung vorgesehen, über die die Fahrerkabine 12 per steckbarer Kabelverbindung 16 an das Containertransportfahrzeug 10 bei ihrer Montage angeschlossen wird.

Wird das Containertransportfahrzeug 10 fahrerlos im reinen Automatik-Betrieb verwendet, kann die Fahrerkabine 12 entfernt werden.

Das fahrerlos oder bemannt betreibbare flurgebundene Containertransportfahrzeug 10 besitzt also für den fahrerlosen Betrieb ein mit einem in Wirkverbindung mit dem Fahrantrieb und/oder der Lenkung und/oder der Bremsanlage bringbares Steuersystem, das Mittel zum Eingeben und Speichern von möglichen Fahrtrouten und einer Transportaufgabe, Mittel zum automatischen Bestimmen der Fahrzeugposition im Raum, Mittel zur Steuerung der Bewegung des Containertransportfahrzeugs 10 in Abhängigkeit von dessen Position im Raum und von der vorgegebenen Transportaufgabe und Mittel zum Abbremsen des Containertransportfahrzeugs 10 beim Vorhandensein von Hindernissen aufweist.

Zusätzlich ist das Containertransportfahrzeug 10 für den bemannten Betrieb mit einer Fahrerkabine 12 mit einem Kontrollsystem 13 für die Lenkung, die Bewegungssteuerung und das Bremsen im bemannten Betrieb versehen.

### Bezugszeichenliste

- 1: Kai
- 2: Containerbrücken
- 3: Containerlager
- 4: Lagergassen
- 5: erste Portalkrane
- 6: Übergabeplätze
- 7: zweite Portalkrane
- 8: Übergabeplätze
- 9: Schienenstrecke
- 10: Containertransportfahrzeug
- 11: Sicherheitsschleuse
- 12: Fahrerkabine
- 13: Kontrollsystem
- 14: vorderes Ende
- 15: Schnittstelle
- 16: Kabelverbindung

- A: Automatik-Bereich
- B: Manuell-Bereich

## Patentansprüche

1. Wahlweise fahrerlos oder bemannt betreibbares, flurgebundenes und gummibereiftes Containertransportfahrzeug (10), wobei das Containertransportfahrzeug (10) mit einem in Wirkverbindung mit dem Fahrantrieb und/oder der Lenkung und/oder der Bremsanlage bringbaren Steuersystem für einen fahrerlosen Betrieb ausgestattet ist, das Mittel zum Eingeben und Speichern von möglichen Fahrtrouten und einer Transportaufgabe, Mittel zum automatischen Bestimmen der Fahrzeugposition im Raum, Mittel zur Steuerung der Bewegung des Containertransportfahrzeugs (10) in Abhängigkeit von dessen Position im Raum und von der vorgegebenen Transportaufgabe und Mittel zum Abbremsen des Containertransportfahrzeugs (10) beim Vorhandensein von Hindernissen aufweist, und das Containertransportfahrzeug (10) mit einer Hilfseinrichtung zur Steuerung in einem bemannten Betrieb verbindbar ist,
**dadurch gekennzeichnet, dass** die Hilfseinrichtung eine Fahrerkabine (12) umfasst, die mit einem Kontrollsystem (13) für die Lenkung, die Bewegungssteuerung und das Bremsen im bemannten Betrieb versehen ist, und das Containertransportfahrzeug (10) an der vorderen Stirnseite eine lösbare Befestigungsmöglichkeit für die Fahrerkabine (12) aufweist.

2. Containertransportfahrzeug nach Anspruch 1, **dadurch gekennzeichnet, dass** das Containertransportfahrzeug (10) eine Schnittstelle zum Ankoppeln des Kontrollsystems (13) für den bemannten Betrieb an die Fahrzeugsteuerung aufweist.

## Claims

1. Ground-borne rubber-tyred container transport vehicle (10) suitable for driverless or manned operation as selected, the container transport vehicle (10) being equipped with a control system for driverless operation which can be operatively connected to the travel drive and/or the steering and/or the braking system and which has means for entering and storing possible routes of travel and a transporting job, means for automatically determining the position of the vehicle in space, means for controlling the movement of the container transport vehicle (10) as a function of its position in space and of the handling job which has been specified, and means for braking the container transport vehicle (10) in the presence of obstacles, and the container transport vehicle (10) being able to be connected to an auxiliary arrangement for control in manned operation, **characterised in that** the auxiliary arrangement comprises a driver's cab (12) which is provided with a controlling system (13) for steering, for the control of movement and for braking in manned operation, and the container transport vehicle (10) has at the front end-face a releasable facility for fastening the driver's cab (12) in place.

2. Container transport vehicle according to claim 1, **characterised in that** the container transport vehicle (10) has an interface for coupling the controlling system (13) for manned operation to the vehicle control system.

## Revendications

1. Véhicule de transport de conteneurs (10) au choix avec ou sans chauffeur, monté sur pneumatiques et lié au sol, le véhicule de transport de conteneurs (10) étant équipé d'un système de commande pouvant être fonctionnellement relié au système d'entraînement et/ou au système de direction et/ou au système de freinage en mode sans conducteur, lequel système de commande comporte des moyens pour entrer et stocker des itinéraires de déplacement possibles et une tâche de transport, des moyens pour déterminer automatiquement la position du véhicule dans l'espace, des moyens pour commander le déplacement du véhicule de transport de conteneurs (10) en fonction de sa position dans l'espace et de la tâche de transport prédéterminée, et des moyens pour freiner le véhicule de transport de conteneurs (10) en présence d'obstacles, et le véhicule de transport de containers (10) pouvant être relié à un dispositif auxiliaire de commande en mode avec conducteur, **caractérisé en ce que** le dispositif auxiliaire comporte une cabine de conducteur (12) qui est dotée d'un système (13) de contrôle de la direction, de la commande de déplacement et du freinage en mode avec conducteur, et le véhicule de transport de conteneurs (10) comportant sur la face avant une possibilité de fixer la cabine de conducteur (12) de façon amovible.

2. Véhicule de transport de conteneurs selon la revendication 1, **caractérisé en ce que** le véhicule de transport de conteneurs (10) présente une interface destinée à coupler le système (13) de contrôle du fonctionnement avec conducteur à la commande de véhicule.
